# EUROPÄISCHE PATENTSCHRIFT

(11) **EP 0 335 072 B1**
(45) Veröffentlichungstag und Bekanntmachung des Hinweises auf die Patenterteilung: **21.07.1993**
(21) Anmeldenummer: 89101180.1
(22) Anmeldetag: 24.01.1989
(51) Int. Cl.: F16F 15/12

(54) **Drehschwingungsdämpfer**
Rotational vibration damper
Amortisseur de vibrations de rotation

(30) Priorität: 30.03.1988 DE 3810764
(43) Veröffentlichungstag der Anmeldung: 04.10.1989
(73) Patentinhaber: Dr.Ing.h.c. F. Porsche Aktiengesellschaft, 70435 Stuttgart (DE)
(72) Erfinder: Grandhuber, Rudolf, Dipl.-Ing., D-7910 Neu-Ulm 7 (DE); Ampferer, Herbert, Dipl.-Ing., D-7123 Sachsenheim 2 (DE)

(56) Entgegenhaltungen:
- DE-A- 3 616 083
- FR-A- 2 279 972
- GB-A- 2 019 528
- US-A- 2 972 904
- US-A- 3 970 398

## Beschreibung

Die Erfindung bezieht sich auf einen Drehschwingungsdämpfer nach dem Oberbegriff des Patentanspruchs 1.

Ein bekannter Kurbelwellen-Drehschwingungsdämpfer, US-A-2,972,904, besitzt eine Nabe und einen Massekörper. Letzterer ist zur Nabe - in axialer Richtung gesehen - versetzt angeordnet. Dieser Ausführung haftet der Nachteil an, daß beim Betrieb der Brennkraftmaschine die Einrichtung zur Drehmomentübertragung zwischen Kurbelwelle und Nabe in vollem Umfang Biegemomente, hervorgerufen durch Unwuchten des Drehschwingungsdämpfers, aufnimmt, was zu Überbeanspruchungen der Naben-Wellen-Verbindung führen kann.

Außerdem offenbart die US-A-3 970 398 eine Wellenkupplung mit zwei über eine Verzahnung zusammenwirkende Wellen, deren Wellenendebereiche, die sich teilweise übergreifen, von einem weiteren Wellenteil umgeben ist, das sich mit axial beabstandeten Bohrungen an korrespondierenden Aufnahmen der Wellen abstützt.

Aufgabe der Erfindung ist es daher, zwischen Drehschwingungsdämpfer und Kurbelwelle solche Vorkehrungen zu treffen, daß einerseits eine funktionsgerechte Drehmomentübertragung sichergestellt ist und andererseits die auftretenden Biegemomente wirkungsvoll aufgenommen werden.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß die Trennung von Drehmomentübertragung und Biegemomentaufnahme einen sicheren Betrieb des Drehschwingungsdämpfers auf der Kurbelwelle gewährleistet. Dabei lassen sich sowohl die Einrichtung zur Drehmomentübertragung als auch die Stützelemente zur Biegemomentaufnahme zwischen Drehschwingungsdämpfer und Kurbelwelle auf einfache Art und Weise realisieren.

In der Zeichnung wird ein Ausführungsbeispiel der Erfindung gezeigt, das nachstehend näher beschrieben ist.
Es zeigt
- Fig. 1: einen Längsschnitt durch einen Drehschwingungsdämpfer, der mit einer Kurbelwelle verbunden ist,
- Fig. 2: einen Schnitt nach der Linie II-II der Fig. 1 in größerem Maßstab.

Ein Drehschwingungsdämpfer 1 wird gebildet durch einen Massekörper 2 und eine Nabe 3. Der Massekörper 2 umfaßt einen Träger 4 mit einem kreisrunden Aufnahmering 5, einem Zwischenring 6, einem elastischen Ringkörper 7 und einem Masseteil 8, das bei 9 mit einem Mehrfachriemen 10 zusammenwirkt. Der Aufnahmering 5 ist mit einem radialen Steg 11 versehen, der über eine oder mehrere Schrauben 12 mit der Nabe 3 verbunden ist.

Die Nabe 3 ist auf einem Zapfen 13 einer Kurbelwelle 14 einer nicht näher gezeigten Brennkraftmaschine der Hubkolbenbauart angeordnet. Zwischen Nabe 3 und Zapfen 13 ist eine Einrichtung 15 zur Drehmomentübertragung vorgesehen. Diese Einrichtung wird durch eine Innenverzahnung 16 der Nabe 3 und eine Außenverzahnung 17 des Zapfens 13 der Kurbelwelle 14 gebildet. Beide Verzahnungen 16 ,und 17 erstrecken sich in axialer Richtung A-A der Nabe 3 und des Zapfens 13.

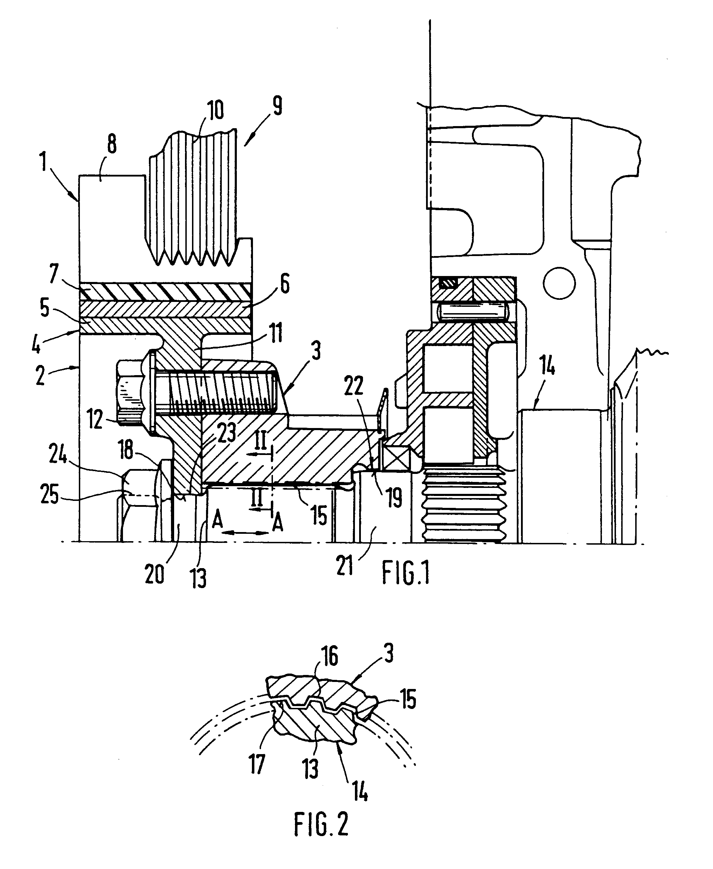

Der Massekörper 2 ist in axialer Richtung A-A versetzt zur Nabe 3 angeordnet, wodurch beim Betrieb der Brennkraftmaschine Biegemomente zwischen Nabe 3 und Zapfen 13 auftreten. Zur Aufnahme der Biegemomente sind beabstandete radiale Stützelemente 18, 19 zwischen Drehschwingungsdämpfer 1 und Kurbelwelle 14 vorgesehen. Die Stützelemente 18, 19 werden durch Zapfenabschnitte 20, 21 der Kurbelwelle 14 und Bohrungen 22, 23 der Nabe 3 bzw. des Stegs 11 gebildet. Die Stützelemente 18, 19 sind beiderseits der Einrichtung 15 angeordnet. Die Innenverzahnung 16 und die Außenverzahnung 17 sind so gestaltet - Fig. 2-, daß die auftretenden Biegemomente im wesentlichen von den Stützelementen 18, 19 aufgenommen werden.

Zur Befestigung des Drehschwingungsdämpfers 1 auf der Kurbelwelle 14 dient eine Schraubenmutter 24, die den Steg bzw. die Nabe 3 des Drehschwingungsdämpfers 1 in axialer Richtung festlegt und mit einem Gewinde 25 der Kurbelwelle 14 zusammenarbeitet.

## Patentansprüche

1. Drehschwingungsdämpferanordnung an einer Kurbelwelle (14) einer Brennkraftmaschine mit einem Drehschwingungsdämpfer (1), der eine auf der Kurbelwelle (14) mit einer Einrichtung (15) festgesetzten Nabe (3) und einen vorzugsweise gegenüber der Nabe (3) axial versetzten Massekörper (2) umfaßt, dadurch gekennzeichnet, daß die Drehmomentübertragung und Biegemomentaufnahme zwischen Drehschwingungsdämpfer (1) und Kurbelwelle (14) im wesentlichen voneinander getrennt sind, dergestalt, daß die Einrichtung (15) zur Drehmomentübertragung dient und die Biegemomentaufnahme durch zwei oder mehrere beabstandete radiale Stützelemente (18,19) erfolgt, wobei die Stützelemente (18,19) durch Zapfenabschnitte (20,21) der Kurbelwelle (14) und beabstandete Bohrungen (22,23) des Drehschwingungsdämpfers (1) gebildet werden.

2. Drehschwingungsdämpfer nach Anspruch 1, dadurch gekennzeichnet, daß die Einrichtung (15) durch eine Innenverzahnung (16) der Nabe (3) und eine Außenverzahnung (17) der Kurbelwelle (14) gebildet wird, die sich zumindest über einen axialen Teilbereich der Nabe (3) erstrecken.

3. Drehschwingungsdämpfer, dessen Massekörper (2) einen radialen Steg (11) aufweist, der mit der Nabe (3) verbunden ist nach Anspruch 1, dadurch gekennzeichnet, daß am Steg (11) eine Bohrung (23) vorgesehen ist.

4. Drehschwingungsdämpfer nach einem oder mehreren der vorangehenden Ansprüche, dadurch gekennzeichnet, daß die Stützelemente (18, 19) beiderseits der Einrichtung (15) angeordnet sind.

## Claims

1. A rotational-vibration damper arrangement on a crankshaft (14) of an internal-combustion engine, with a rotational-vibration damper (1) comprising a hub (3) secured to the crankshaft (14) by a device (15) and a body of inertia (2) preferably offset axially relative to the hub (3), **characterized in that** the transmission of torque and the absorption of bending moment between the rotational-vibration damper (1) and the crankshaft (14) are essentially separate from one another, in such a way that the device (15) is used for the transmission of torque and the bending moment is absorbed by two or more spaced radial support members (18, 19), the support members (18, 19) being formed by pin portions (20, 21) of the crankshaft (14) and spaced bores (22, 23) in the rotational-vibration damper (1).

2. A rotational-vibration damper according to Claim 1, **characterized in that** the device (15) is formed by an internal toothing (16) in the hub (3) and an external toothing (17) on the crankshafl (14), the said toothings (16, 17) extending at least over an axial portion of the hub (3).

3. A rotational-vibration damper, the body of inertia (2) of which comprises a radial web (11) connected to the hub (3), according to Claim 1, **characterized in that** a bore (23) is provided in the web (11).

4. A rotational-vibration damper according to one or more of the preceding Claims, **characterized in that** the support members (18, 19) are arranged on both sides of the device (15).

## Revendications

1. Ensemble d'amortisseur d'oscillations de torsion sur un vilebrequin (14) d'un moteur à combustion interne comportant un amortisseur d'oscillations de torsion (1) qui comprend un moyeu (3) fixé sur le vilebrequin (14) avec un dispositif (15) ainsi qu'un corps de masse (2), de préférence décalé axialement par rapport au moyeu (3), caractérisé en ce que la transmission du couple de rotation et l'absorption du moment de flexion entre l'amortisseur d'oscillations de torsion (1) et le vilebrequin (14) sont essentiellement séparées l'une de l'autre de manière que le dispositif (15) serve à la transmission du couple de rotation et que l'absorption du moment de flexion s'effectue par deux éléments d'appui (18, 19) ou plus, radiaux, espacés, les éléments d'appui (18, 19) étant formés par des parties de tourillon (20, 21) du vilebrequin (14) et des alésages (22, 23) espacés de l'amortisseur d'oscillations de torsion (1).

2. Amortisseur d'oscillations de torsion selon la revendication 1, caractérisé en ce que le dispositif (15) est formé par une denture intérieure (16) du moyeu (3) et une denture extérieure (17) du vilebrequin (14) qui s'étendent au moins sur une partie axiale du moyeu (3).

3. Amortisseur d'oscillations de torsion dont le corps de masse (2) présente une cloison radiale (11) qui est assemblée au moyeu (3) selon la revendication 1, caractérisé en ce qu'un alésage (23) est prévu sur la cloison (11).

4. Amortisseur d'oscillations de torsion selon une ou plusieurs des revendications précédentes, caractérisé en ce que les éléments d'appui (18, 19) sont placés des deux côtés du dispositif (15).
